Europäisches Patentamt

European Patent Office

Office européen des brevets

(19)

(11) Publication number: 0 626 685 A2

# EUROPEAN PATENT APPLICATION

(21) Application number: 94100598.5

(22) Date of filing: 17.01.94

(51) Int. Cl.5: G11B 19/28, G11B 20/00

(30) Priority: 27.05.93 US 68373

(43) Date of publication of application:
30.11.94 Bulletin 94/48

(84) Designated Contracting States:
DE FR GB IE IT

(71) Applicant: Hewlett-Packard Company
Mail Stop 20 B-O,
3000 Hanover Street
Palo Alto, California 94304 (US)

(72) Inventor: Shelton, Boyd N.
10736 Bridgetower Road
Boise, Idaho 83709 (US)
Inventor: Hessing, Charles E.
11369 W. Hickory Nut
Boise, Idaho 83704 (US)

(74) Representative: Liesegang, Roland, Dr.-Ing. et al
FORRESTER & BOEHMERT
Franz-Joseph-Strasse 38
D-80801 München (DE)

(54) Digital signal processor for a disk drive.

(57) An servo disk drive employs a microcomputer (42) in combination with a digital signal processor (DSP) (44). The microcomputer (42) is designed to configure and initiate the DSP (44), but thereafter operates independently of the digital signal processor (44), allowing for co-processing capabilities. The digital signal processor (44) operates according to a small instruction set, wherein the instructions have relatively small word sizes. The DSP (44) includes a coefficient/data memory (122), a data pointer register (134), and a coefficient pointer register (130). The coefficients are arranged in the memory (122) according to a predefined pattern of use during execution of a program. The coefficient pointer register (130) has the ability to self-increment to the next coefficient in the predefined pattern, and thus the instructions do not carry information concerning the address of the next coefficient.

EP 0 626 685 A2

FIELD OF THE INVENTION

This invention relates to disk drives, and more particularly, to digital signal processors for disk drives.

BACKGROUND OF THE INVENTION

Computer hard disk drives can be generally classified into two categories: dedicated servo disk drives and embedded servo disk drives. Dedicated servo disk drives have one or more magnetic disks wherein one entire surface of a disk is dedicated to storing servo information that is useful in controlling and synchronizing the operation of the magnetic disk and read/write head. In contrast, embedded servo disk drives have one or more magnetic disks wherein each disk has thin "pie-shaped" slices of servo information interspersed between larger "pie-shaped" regions of data.

In general, disk drives employ a closed loop servo control system which depends on position information read from the disk surface(s). In order to accurately read the required position information, a high precision timing system must be created. The timing system must be capable of both acquiring a synchronous operating state with the spinning disk(s) and maintaining that mode of operation indefinitely. The timing system supplies critical timing and status of both the servo system and the read/write system.

According to present design procedures, one of the first tasks in designing a disk drive is to fully characterize the format and capacity of the disk drive. That is, a disk drive engineer must initially specify the drive configuration, read/write timing and other variables, memory capacity, and intended operating environment within which the drive is to work. Once these parameters are known, the engineer designs an application specific integrated circuit (ASIC) which is specifically constructed to control the specified disk drive. Unfortunately, the ASIC-based controller offers little flexibility in the event that it is desirable to change the characteristics or parameters of the disk drive. For example, to change the disk format, a new ASIC must be designed.

Today's design procedures are slow because special ICs must be designed for each new hard disk drive. Swift introduction of new disk drive products is therefore impeded. Furthermore, expenses associated with non-recurring engineering and design time are high. Accordingly, it would be desirable to create a chip set which is flexible and adaptable to many different disk drives having different operating characteristics, formats, and parameters.

Another drawback of conventional processors for closed loop servo disk drives concerns selecting between a microcomputer and a digital signal processor. Prior art designs based on microcomputers are effective at routine management and data flow tasks, but are less effective at intense arithmetic operations. Conversely, prior art designs based on digital signal processors are effective at intense arithmetic operations, but are less effective at routine management and data flow tasks. Accordingly, it would be desirable to create a processor that has the benefits of a microcomputer for management capabilities and of a digital signal processor for calculation capabilities.

SUMMARY OF THE INVENTION

According to one aspect of this invention, a servo and timing processor for a servo disk drive comprises:

a digital signal processor for performing high speed computations affecting servo control of the disk drive;

a servo timing generator, coupled to the digital signal processor, for storing and providing instructions to operably control the disk drive;

a microcomputer operatively coupled to, but separate from, the digital signal processor for initiating operation of the digital signal processor; and

the digital signal processor continuing operation independent of the microcomputer.

According to another aspect of this invention, a digital signal processor for use in a servo and timing processor for a servo disk drive (wherein the digital signal processor is configured to minimize instructions and word-size of individual instructions) comprises:

a first memory for storing a program of instructions;

a second memory for storing coefficients and data, the coefficients being arranged within the second memory according to a predefined pattern of use for the program stored in the first memory;

an operational unit, operatively coupled to the first and second memories, for processing information using the coefficients and data stored in the second memory in accordance with the instructions stored in the first memory;

a program counter for holding an address to the first memory indicative of a memory location that stores a next instruction to be processed by the operational unit;

a data pointer register for holding an address to the second memory indicative of a memory location that stores data to be used in the operational unit; and

a coefficient pointer register for holding an address to the second memory indicative of a memory location that stores a coefficient to be used in the operational unit, the coefficient pointer register including means for indexing to a subsequent address in the predefined pattern indicative of a memory location that stores a next coefficient to be used in the operational unit independently of, and without receiving information from, the instructions to be processed in the operational unit.

These and other aspects of the invention will be apparent from the following disclosure.

BRIEF DESCRIPTION OF THE DRAWINGS

Preferred embodiments of the invention are described below with reference to the following accompanying drawings depicting examples embodying the best mode for practicing the invention.

Fig. 1 is a diagrammatic illustration of an embedded servo disk drive.

Fig. 2 is a block diagram of a servo and timing processor according to this invention.

Fig. 3 is a block diagram of the memories used in a digital signal processor employed within the Fig. 2 processor.

Fig. 4 is a block diagram of an operational unit employed in the Fig. 3 digital signal processor.

Fig. 5 is a block diagram of a servo timing generator data path employed within the Fig. 2 processor.

Fig. 6 is a block diagram of a servo format sequencer employed in the Fig. 5 servo timing generator.

Fig. 7 is a block diagram of an execution register employed in the Fig. 6 servo format sequencer.

DETAILED DESCRIPTION OF THE INVENTION

This disclosure of the invention is submitted in furtherance of the constitutional purposes of the U.S. Patent Laws "to promote the progress of science and useful arts" (Article 1, Section B).

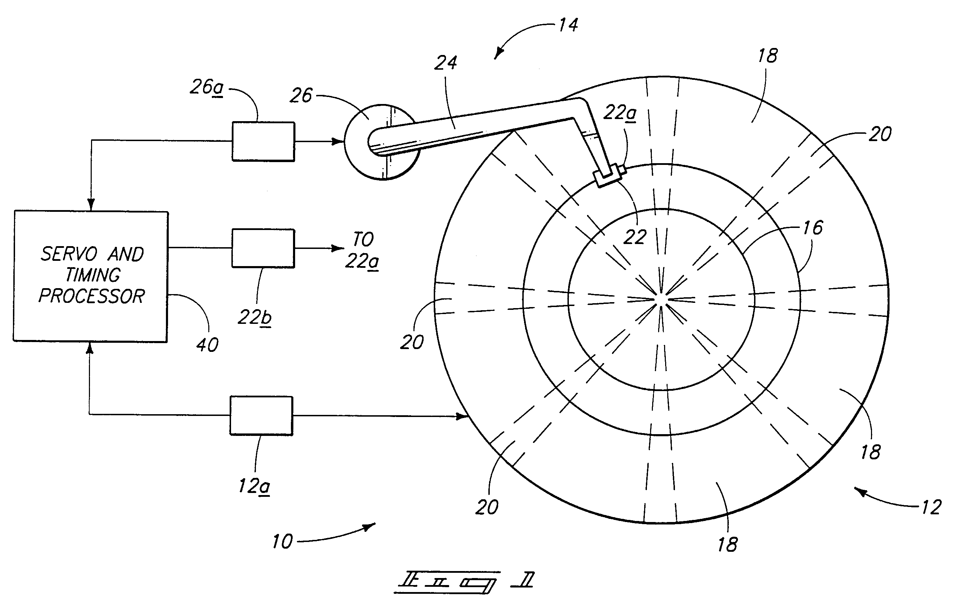

Fig. 1 shows a servo disk drive 10 having a rotatable magnetic disk 12 which is rotated at substantially constant speed, a read/write assembly 14, and a servo and timing processor 40. This invention will be described in the context of embedded servo disk drives, although many aspects of the invention are suitable for dedicated servo disk drives. As used in this disclosure, the term "servo" means the use of a closed loop error-sensing feedback system for controlling an electromechanical device. For example, a "servo" disk drive means the use of feedback in a closed loop system for controlling disk rotational velocity, read/write assembly positioning relative to the disk, and synchronization of the read/write assembly and disk for purposes of writing and retrieving information to and from the disk. Disk drive 10 may have one or more disks. Multiple magnetic disks are aligned along a central axis of rotation. Only one magnetic disk 12, as illustrated in Fig. 1, is shown for purposes of explanation.

Disk 12 has many concentric tracks 16 which are divided into numerous circumferentially spaced pie-shaped regions or sectors. For an embedded servo disk drive, the regions or sectors of disk 12 can generally be classified as data segments 18 and "inter-sector" servo gaps 20. Data segments 18 are relatively large pie-shaped wedges which store recorded bits of data within tracks 16. Servo gaps 20 are relatively small pie-shaped regions interspersed between data segments 18 for storing servo information within tracks 16. Information in the servo gap typically includes radial position codes, circumferential codes, and synchronization codes.

Read/write assembly 14 via a magnetic head 22a transfers servo and data information to and from disk 12. Read/write assembly 14 includes a slider 22 which mounts the magnetic head 22a. The slider 22 is mounted at the end of a rotary actuator arm 24. An actuator motor 26 which moves the arm 24 to accurately position the magnetic head 22a at a selected track 16.

Servo and timing processor 40 is operatively coupled to motor 26 via an actuator power amplifier 26a and a disk spindle motor (not shown) via a power amplifier 12a. Servo and timing signals received by the servo and timing processor 40 via a servo position demodulator 22b are used to control actuator motor 26 for radially positioning the magnetic head and via power amplifier 12a for controlling the disk spindle motor to synchronize the bit stream from the magnetic head with the clock of the servo and timing processor.

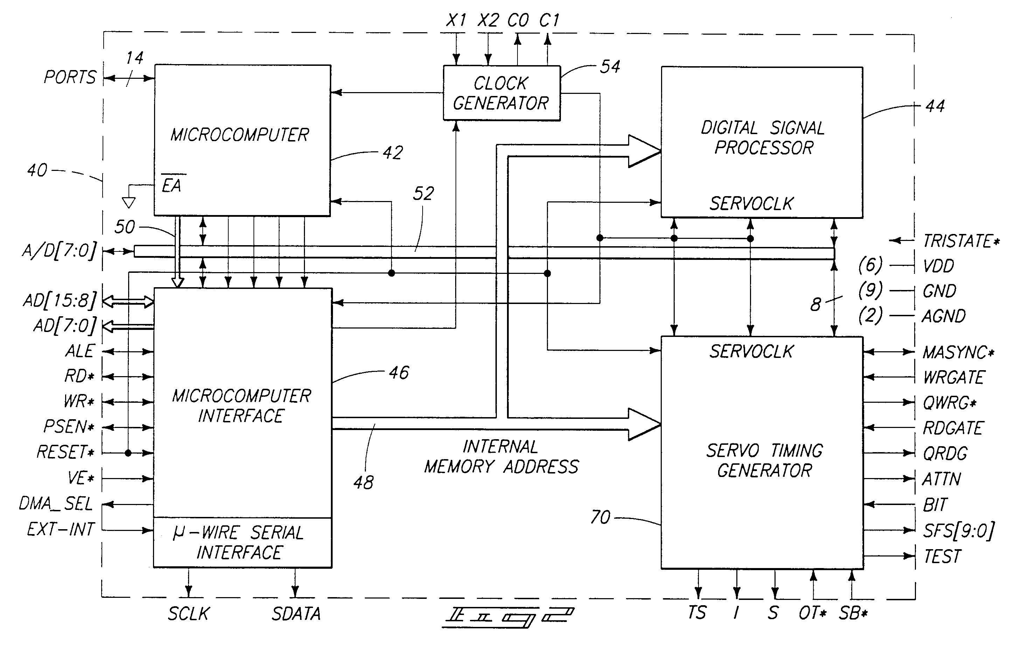

Fig. 2 shows servo and timing processor 40 in more detail. It comprises a microcomputer 42, a digital signal processor 44, a microcomputer interface 46, and a servo timing generator 70. Preferably, these four components are formed on a single integrated circuit chip.

Microcomputer 42 is the master component. In the present example, it is provided with a 256 byte RAM which is programmable to configure and initiate the digital signal processor 44 and servo timing generator 70. The program ROM (not shown) for microcomputer 42 is preferably located external to servo and timing processor chip 40. There are several microcomputers that are suitable for use in this invention, both 8 and 16 bit types.

Digital signal processor 44 is a stored program machine wherein the program store is preferably a read/write random access memory (RAM). The architecture, as will become more evident in the continuing discussion, is very efficient and operates using a comparatively small or reduced instruction set. As a result, the die area for the digital signal processor 44 is kept at a minimum, thereby permitting incorporation into the servo and timing processor chip 40.

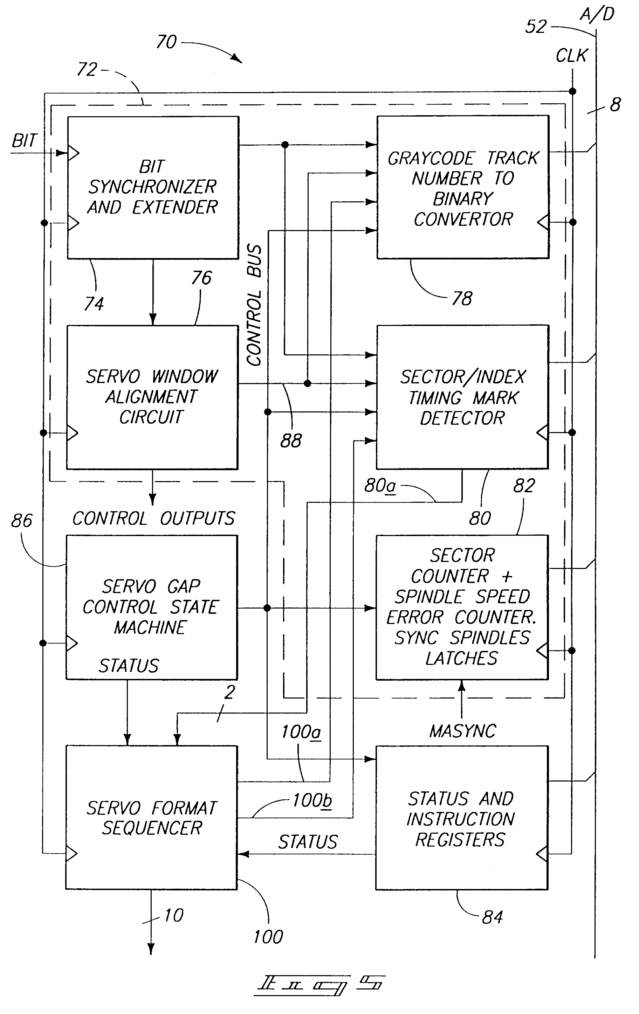

Servo timing generator 70 has a programmable memory that is preferably a read/write RAM, as is discussed in greater detail below with reference to Figs. 5-7. The RAM-based digital signal processor 44 and servo timing generator 70 afford maximum flexibility. Different or altered programs can be written into these memories as desired or necessary to effectively change operating parameters and characteristics of the servo and timing processor 40. In this manner, processor 40 is adaptable after fabrication to many different disk drive formats and configurations, making it advantageous over prior art ASIC-based machines. Further, the RAM-based design allows real-time adaptability such that the servo and timing processor 40 can "learn" and adapt to changing operating parameters on the fly.

Digital signal processor 44 and servo timing generator 70 are memory-mapped within the address space of microcomputer 42. Microcomputer interface 46 facilitates communication between microcomputer 42 and these memory-mapped devices. Additionally, microcomputer interface 46 manages communication between integrated, on-chip components and devices that are external to servo and timing processor 40.

Microcomputer 42 transmits address signals via the local address bus 50 to microcomputer interface 46, which then communicates these signals to digital signal processor 44 and servo timing generator 70 via an internal memory address bus 48. Bus 48 is preferably an 8-bit bus. In this manner, microcomputer 42 addresses the memory in each of the digital signal processor 44 and servo timing generator 70 via local address bus 50, microcomputer interface 46, and memory address bus 48. Address/data (A/D) bus 52 facilitates data transfer among the on-chip components of servo and timing processor 40.

Servo and timing processor 40 also has a clock generator 54 which provides cyclically pulsed timing signals to all four major components of processor 40 and to external read/write, data path controller, and other required hardware. A global chip RESET is provided to initialize the four primary functional blocks to a predefined state, and readies them for configuration and use.

The external input/output signals of servo and timing processor 40 are conventional, and are not described in detail.

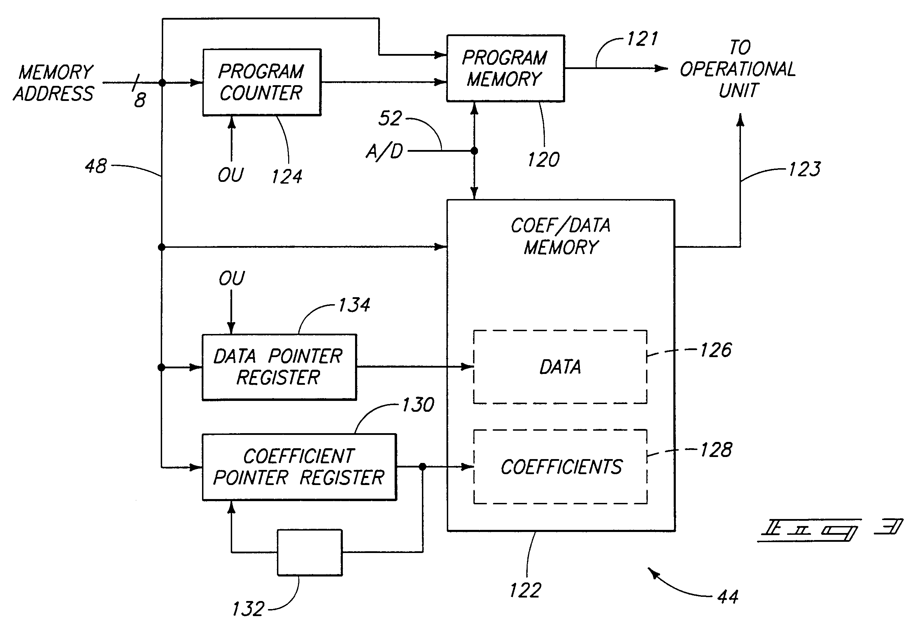

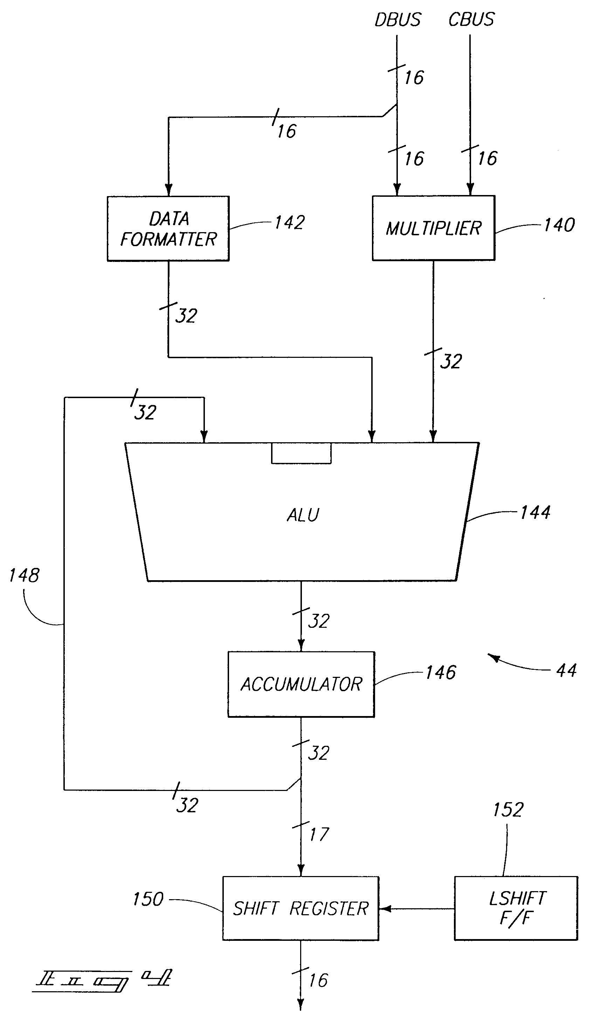

Figs. 3 and 4 illustrate digital signal processor 44 in more detail, with Fig. 3 showing the memory portion and Fig. 4 showing the operational unit. Digital signal processor 44 includes a first or program memory 120 for storing a program of instructions and a second or coefficient/data memory 122 which stores coefficients and data to be used in calculations made by the DSP. Both memories are preferably read/write memories that are capable of being written to, or reprogrammed, multiple times, such as alterable RAMs. Memories 120 and 122 are coupled to provide information to the operational unit (discussed below with reference to Fig. 4) via corresponding buses 121 and 123. These busses are separate to allow simultaneous fetching of instructions and associated data/coefficients. The memories 120 and 122 are also coupled to the microcomputer 42 via address bus 48 (and interface 46) and data bus 52, thereby allowing the microcomputer to address the memory, and write or read information thereto. In this example, program memory 120 has a capacity of 512 or 1024 bytes and the coefficient/data memory 122 has a memory capacity of 128 or 256 sixteen-bit words. This is relatively small as compared to typical DSPs.

A program counter 124 is used to access memory locations in the program memory 120. More specifically, it holds an address to the program memory 120 that points to the memory location storing the next instruction to be executed by the DSP. In this example, program counter 124 is a 9-bit or 10-bit counter/register.

Coefficient/data memory 122 is internally organized into data storage 126 and coefficient storage 128. Data are characterized as those variables that are likely to change during execution of the instructions. Such values are retrieved from memory, changed, and stored again multiple times. Coefficients are characterized as constants that are used in arithmetic operations. According to an aspect of this invention, the coefficients are arranged in the coefficient/data memory 122 according to a predefined pattern. This is possible because the execution instructions use the same constants for a series of calculations.

A coefficient pointer register 130 points to a memory location of the next coefficient in storage 128 to be used in the digital signal processor. In this example, the coefficient pointer register 120 is an 8-bit counter/register. It includes a means for indexing (diagrammatically illustrated as block 132) to subsequent addresses in the predefined pattern of coefficient storage 128. Because the coefficient sequence is known, the coefficient pointer can increment to the next address simply based on knowledge of the currently held address. This indexing can be performed independently of any instruction set received from the operational unit or any input from the microcomputer. The self-incrementing feature of the coefficient pointer register 130 offers a significant benefit in that the instructions do not carry coefficient pointer information. As a result, smaller instruction sets and smaller word-size instructions are achieved.

A data pointer register 134 points to a memory location of the next value in data storage 126 to be used in the digital signal processor. In this example, the data pointer register 134 is an 8-bit counter/register.

The program counter 124, coefficient pointer register 130, and data pointer register 134 are coupled to receive initializing addresses from microcomputer 42 via bus 48. Additionally, program counter 124 and data pointer register 134 are coupled to receive the next address from the operational unit (OU) according to the next instruction to be executed.

According to another aspect of this invention, the data and coefficient pointers are configured to facilitate quick addressing of the coefficient/data memory 122. The memory 122 has a memory capacity of m words (e.g., m = 128 or 256 words) by n bits (e.g. n = 16 bits) which is arranged in p pages (e.g., 8 or 16 pages for associated 128- or 256-word memory) of q words (e.g., 16 words). In this example, the 8-bit data pointer register has s bits (e.g., 4 bits) assigned to address one of the 8 or 16 pages and t bits (e.g., 4 bits) assigned to address one of the 16 words within the addressed page. This construction enhances instruction size for accessing data memory.

The operational unit of the digital signal processor 44 is operatively coupled to the program and data/coefficient memories 120 and 122 via data bus (DBUS) and coefficient bus (CBUS). These buses are illustrated as bus 123 in Fig. 3. In general, the operational unit includes a signed 2's complement multiplier, an arithmetic unit, a command/configuration register, a program status register, and a program fetch and execute register.

A portion of the operational unit is illustrated in Fig. 4. A multiplier 140 is coupled to receive two 16-bit words from the data and coefficient buses (DBUS and CBUS). In this example, multiplier 140 is a 16 x 16 bit hardware block which operates on 16-bit signed 2's complement operands and produces a 32-bit signed 2's complement product. The 32-bit product carries a duplicate sign bit which is maintained through all calculations in the operational unit while it is operating in the 2's complement mode. A data formatter 142 is coupled to receive the data word from the data bus (DBUS). It also produces a 32-bit value.

An ALU 144 is connected to the multiplier 140 and the data formatter 142. As an example, the ALU 44 is a 32-bit full adder. It is capable of operating in either a signed 2's complement mode or an unsigned integer mode. Setting and clearing of this mode is accomplished by dedicated instructions of the digital signal processor and so the mode may be changed during the execution of a program.

An accumulation register 146 is connected to receive a 32-bit output of the ALU 144. A value stored in this register may be shifted left or right as desired. Operand selection/modification circuitry is coupled to receive the 32-bit output from the accumulation register 146. This circuitry allows for forming sums or differences in the adder, saturating the accumulation register, and positioning of data in the 32-bit operand word. It includes a 32-bit feedback bus 148, a shift register 150, and a left shift flip/flop 152. Data taken from the accumulation register 146 is automatically shifted left one bit by shifter register 150 prior to being placed on the bus. This eliminates the duplicate sign bit before the data is stored or used as an operand for the multiplier.

The digital signal processor 44 also includes command/configuration and status registers. In this example, the command/configuration register is a 4-bit register accessible by microcomputer to activate and configure the digital signal processor. The command/configuration register includes the bit structure of the following table:

| Bit | Name | Description |
|---|---|---|
| 3 | ACTIVE | Indicates whether or not the DSP is currently executing a program or if it is waiting to begin execution. |
| 2 | 2_COMP | 2's complement select bit. |
| 1 | U/L | Selects the positioning of the 16-bit data in the 32-bit operational unit's operand word. |
| 0 | SS | Selects the single step mode for any instruction executed by the DSP. |

The status register is an 8-bit register that holds a program status word which is updated by the digital signal processor 44 as it executes the program. The microcomputer 42 can read from, or write to, the status register. The status register includes the bit structure of the following table:

| Bit | Name | Description |
|---|---|---|
| 7 | (MSB) LOVFL | Latched Overflow. |
| 6 | OVFL | Accumulator/divide quotient overflow. |
| 5 | ACC__SGN | Accumulator sign. |
| 4 | ACC__EVN | Accumulator even. |
| 3 | ACC__ZERO | Accumulator zero. |
| 2 | DELTA__SGN | Anticipatory overflow. |
| 1 | ADD__FCO | Final carry out of the adder block. |
| 0 | BAD__OPCODE | Encounters undefined opcode during program execution. |

The digital signal processor 44 is designed to receive initial instructions and information from microcomputer 42, but thereafter, operates independently of the microcomputer. More specifically, the microcomputer 42 activates the digital signal processor 44 by setting the ACTIVE command bit. When set, a state machine within the digital signal processor 44 loads the instruction register with the instruction stored in the address held in the program counter. The digital signal processor then executes the program until it reaches a termination instruction. In this manner, the microcomputer 42 and digital signal processor 44 are freed to co-process information. In comparison to prior art disk drive processors, the servo and timing processor of this invention possesses effective data management capabilities, due to the microcomputer 42, and effective arithmetic capabilities, due to the digital signal processor 44.

As a result of the system architecture, a minimum instruction set and small word-size per instruction are achieved in this invention. For example, a comparatively small RAM (512 or 1024 bytes) is employed to store the program. Further, the instruction set for the digital signal processor 44 is primarily comprised of 8-bit words. This instruction set affords considerable efficiency.

The servo timing generator 70 will be described in more detail with reference to Figs. 5-7. Fig. 5 illustrates the data path included in the servo timing generator 70. Generator 70 includes servo pattern recognition and decode circuitry 72, illustrated in dash outline, and a servo format sequencer 100. Pattern recognition and decode circuitry 72 has two primary functions: (1) to locate sector synchronization codes or marks; and (2) to maintain a consistent time base shared by both the read/write and servo systems. For embedded servo disk drives, there is no continuous feedback from the disk from which a clock signal can be derived. Servo samples occur only once per sector. During traverse of each servo gap, synchronization is measured and a disk spindle speed error is produced. Pattern recognition and decode circuitry 72 determines synchronization by detecting and decoding a synchronization pattern within a temporal window timed from the previous sector.

Servo pattern recognition and decode circuitry 72 comprises a bit synchronizer and extender 74, a servo window alignment circuit 76, a graycode track number to binary convertor 78, a sector/index timing mark detector 80, and a sector counter and spindle speed error counter 82. Pattern recognition and decode circuitry 72 receives serial data (BIT) at the bit synchronizer and extender 74 from a source external to servo and timing processor 40. Incoming serial data (BIT) is asynchronous to the system clock and is generally of short duration. Bit synchronizer 74 runs at the system clock frequency of the servo timing generator 54 and synchronizes the serial (BIT) signal stream to that clock.

Servo window alignment circuit 76 uses the synchronized output from bit synchronizer 74 to generate a decode window signal which is used in decoding the graycode track number and the servo/index timing mark(s). The signal of the window alignment circuit 76 on circuit 88 is an enabling signal for the track number converter 78 and the detector 80. During the existence of the signal on the circuit 88, a defection window is placed around the incoming bit signal stream from the synchronizer 74, so that only the proper signals are received by the track number convertor 78 and timing mark detector 80. Decode window signal on circuit 88, in combination with an overall timing window signal produced by servo format sequencer 100 on circuits 100a, 100b, enable both convertor 78 and timing mark detector 80.

Sector counter 82 provides a counter state that is used in the generation of the start of sector pulses for a disk data formatter on an external chip (not shown). Counter 82 is updated once per servo sector regardless of whether the sector synchronization pattern is found.

Servo timing generator 70 also has status and instruction registers 84 and a servo gap control state machine 86. Registers 84 are coupled to provide various status conditions, see Fig. 2, (attention, ATTN, off-track, OT, too slow, TS, start of data sector, 1/S) to servo format sequencer 100. State machine 86, via a control bus 86a, maintains sector counter 82, initializes graycode track convertor 78, and manages status registers 84.

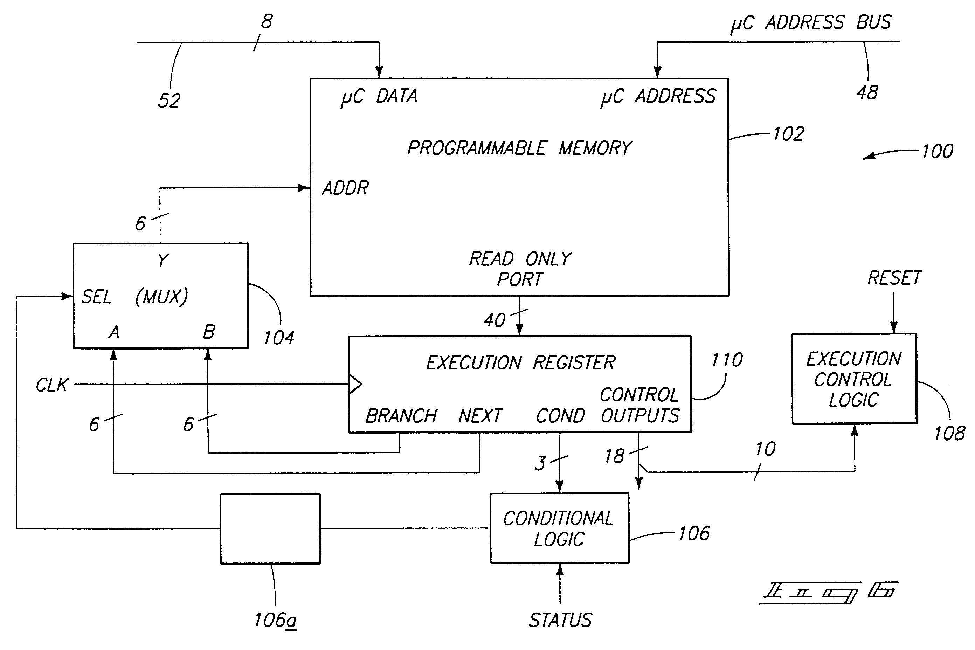

Servo format sequencer 100 is electrically coupled by a circuit 80a to the timing mark detector of the servo pattern recognition and decode circuitry 72. Sequencer 100 stores instructions used to control the disk drive and is shown in Fig. 6 in greater detail. It comprises a programmable memory 102 (RAM) and an execution register 110. Programmable memory 102 is a writable program store into which a set of multiple instructions can be written. Programmable memory 102 is preferably a read/write memory that is capable of being written to, or reprogrammed, multiple times. As an example, programmable memory 102 is an alterable RAM, with a dual port RAM having a storage space of 48 words x 40-bits being most preferred. However, programmable memory 102 can also be a one time programmable memory, such as a PROM or EPROM, or a memory that can be programmed more than once, such as an EEPROM.

Programmable memory 102 affords tremendous design flexibility because the instructions to be employed to control a specified disk drive can be programmed into the servo timing generator 70 after fabrication of servo and timing processor 40. Additionally, programmable memory 102 can be adapted for many different disk drive environments by programming it with a desired set of operating instructions. For example, programming the memory 102 with one set of instructions would enable servo and timing processor 40 to control one type of disk drive format, while writing a different set of instructions to memory 102 would facilitate control of another type of disk drive format. The preferred RAM for the programmable memory 102 offers maximum flexibility because new operating instructions can be reprogrammed or updated on a real-time basis.

The programmable memory or RAM is preferably mapped into an external data memory address space of microcomputer 42 (Fig. 2). Instructions to be held in the programmable memory 102 are read from the external ROM by the microcomputer 42 and then are downloaded from the microcomputer 42 via bus 52. In this example, once in the programmable memory 102, five bytes of data are concatenated to provide a 40-bit wide control/timing instruction word. Data stored in the programmable memory 102 may be accessed by the microcomputer 42 in either a read or write mode.

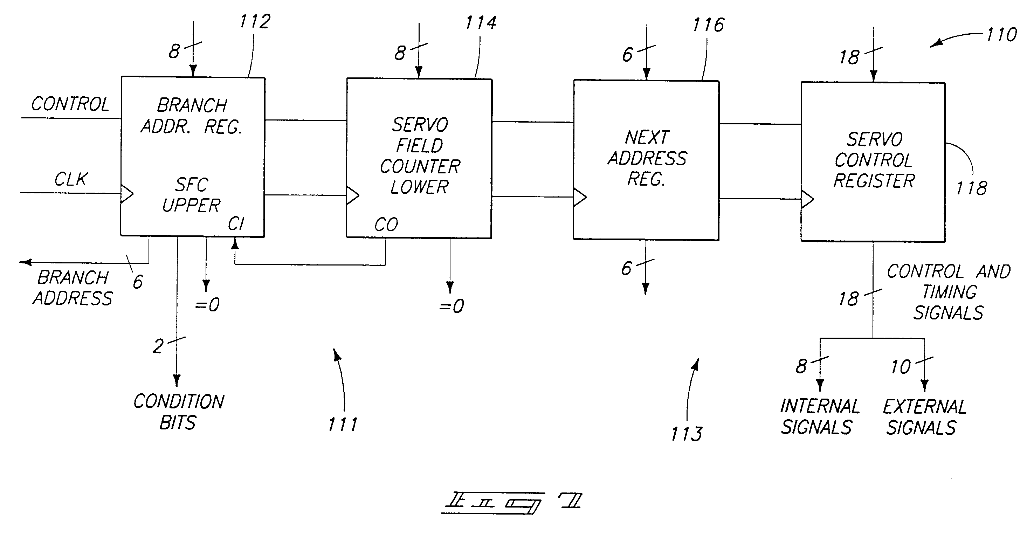

One 40-bit instruction word is loaded in parallel through a read only port of programmable memory 102 to execution register 110. There is one-for-one mapping of hardware and the instruction fields of the instruction word programmed into the programmable memory 102. Each instruction word contains bits for a servo count field, a next address field, and a control field. As shown in Fig. 7, execution register 110 includes a counter 111 and a register 113. The 40-bit instruction word downloaded from programmable memory 102 includes an upper 16 bits, the servo count field, for use in counter 111 and a lower 24 bits, the next address field and control field, for input into register 113. Counter 111 divides a given disk sector into fields. That is, the upper 16-bit portion of the instruction word defines the length of each field of a servo sector. The number of fields and length of the fields per servo sector is thereby adjustable depending upon the programming of the control store. This feature allows flexibility in the disk drive servo and data format.

Counter 111, together with register 113, produce timing signals from the downloaded instruction word which allow processing of the fields of the servo sector. In this example, counter 111 is partitioned into two 8-bit counters, an 8-bit upper counter/register 112 and an 8-bit lower servo field counter 114. In the servo gap, the 8-bit counter/register 112 can also function as a register for holding a branch address (discussed below). Servo field counter 114 is preferably a down counter.

Within a servo gap 20 of the servo sector, upper counter/register 112 operates as a branch address register to hold the address of an instruction contained in programmable memory 102 to which the program will jump in the event that the selected status condition should match the desired state. Outside of the servo gap, upper counter/register 112 and lower down counter 114 combine to provide a 16-bit down counter which times the data sector area of the servo sector. Since the branch address register becomes part of the instruction down count field outside the servo gap, no conditional branching is possible in that area.

Control register 113 preferably comprises a 6-bit next address register 116 and an 18-bit servo control register 118. Next address register 116 holds the address of the next instruction in the program sequence to be executed in programmable memory 102, unless a status condition branch occurs. Servo control register 118 contains the current state of all timing signals used in the servo and read/write systems. It outputs control and timing signals for use in controlling external circuitry that effectuates operation of the disk drive, such as position demodulators, analog-to-digital converters, and read/write circuits.

As shown in Fig. 6, the branch address and next address held in execution register 110 are output to a multiplexor 104 as inputs A and B, respectively. Multiplexor 104 selects either the branch address B or the next address A for input to the programmable memory 102 depending upon a status condition output on circuit 106a by conditional logic circuitry 106.

Logic circuitry 106 is coupled to receive a condition selection signal from execution register 110. Logic circuitry 106 is also coupled to status and instruction registers 84 (Fig. 5) to receive one of a plurality of status conditions stored in the status and instruction registers. In the present example, one of eight different status conditions may be selected by the 3-bit condition selection signal output by execution register 110. The selected status condition is output by logic circuitry 106 to multiplexor 104 via circuit 106a and is used to select either the next address (input A) or the branch address (input B) held in execution register 110.

In this manner, servo format sequencer 100 is self-controlling and, by virtue of its ability to select and branch to various instructions stored in the RAM, can operate independently of microcomputer 42. Microcomputer 42 simply initializes and configures servo timing generator 70, and more particularly servo format sequencer 100, and then sequencer 100 operates independently until microcomputer 42 reconfigures the programmable memory.

The servo timing processor according to the invention offers tremendous flexibility and adaptability to different applications. This is attributable to the RAM-based memory-mapped units of digital signal processor 44 and servo timing generator 70. More specifically, the RAM-based programmable servo format sequencer 100 of servo timing generator 70 can store different programs of instructions, whereby each program controls the hard disk according to different characteristics and operating parameters. A designer simply programs microcomputer 42 to a desired set of parameters for a particular disk drive. This program is then written into the programmable memory 102 of the servo format sequencer 100. Servo timing generator 70 runs the program independently of microcomputer 42 to control the disk drive, thereby freeing up the microcomputer for other tasks. If the parameters or operational conditions change, the designer simply reprograms the servo and timing processor 40 by writing in new a program of instructions to programmable memory 102 of servo format sequencer 100. Additionally, the RAM-based design is adaptive to changing operating environments because the program stored within it can be updated on the fly.

The present invention is therefore advantageous over prior art systems which use ASICs that are dedicated to specific disk formats and parameters and are not adaptable.

In compliance with the statute, the invention has been described in language more or less specific as to structural and methodical features. It is to be understood, however, that the invention is not limited to the specific features shown or described, since the means herein disclosed comprise preferred forms of putting the invention into effect. The invention is, therefore, claimed in any of its forms or modifications within the proper scope of the appended claims appropriately interpreted in accordance with the doctrine of equivalents.

**Claims**

1. A digital signal processor for use in a servo and timing processor for a servo disk drive, the digital signal processor being configured to minimize instructions and bit-size of individual instructions, the digital signal processor comprising:

a first memory (120) for storing a program of instructions;

a second memory (122) for storing coefficients and data, the coefficients being arranged within the second memory according to a predefined pattern of use for the program stored in the first memory (120);

an operational unit, operatively coupled to the first and second memories, for processing information using the coefficients and data stored in the second memory (122) in accordance with the instructions stored in the first memory (120);

a program counter (124) for holding an address to the first memory (120) indicative of a memory location that stores a next instruction to be processed by the operational unit;

a data pointer register (134) for holding an address to the second memory (122) indicative of a memory location that stores data to be used in the operational unit; and

a coefficient pointer register (130) for holding an address to the second memory (122) indicative of a memory location that stores a coefficient to be used in the operational unit, the coefficient pointer register (130) including means for indexing (132) to a subsequent address in the predefined pattern indicative of a memory location that stores a next coefficient to be used in the operational unit independently of, and without receiving information from, the instructions to be processed in the operational unit.

2. A servo disk drive comprising the digital signal processor of claim 1.

3. A digital signal processor for use in a servo and timing processor for a servo disk drive, the digital signal processor comprising:

a RAM (122) having a memory capacity of m words x n bits, the RAM (122) being arranged in p pages of q words;

a k-bit data pointer register (134) for holding an address to a memory location in the RAM (122), the data pointer register (134) having s bits assigned to address one of the p pages in the RAM (122) and t bits assigned to address one of the words within the addressed p page, where $k = s + t$; and

a k-bit coefficient pointer register (130) for holding an address to a memory location in the RAM (122), the coefficient pointer register (130) including means for independently indexing (132) to a subsequent address.

4. A digital signal processor according to claim 5 wherein the RAM memory capacity is not greater than 256 words (m 256) and the data and coefficient registers are 8-bit registers ($k = 8$).

5. A digital signal processor according to claim 5 wherein:

the RAM memory capacity is 128 words ($m = 128$) x 16 bits ($n = 16$) and the RAM is arranged in 8 pages ($p = 8$) of 16 words ($q = 16$);

the data and coefficient registers are 8-bit registers ($k = 8$); and

the data register has 4 bits ($s = 4$) assigned to address one of the 8 pages and 4 bits ($t = 4$) assigned to address one of the 16 words of the addressed page.

6. A servo and timing processor for a servo disk drive, the servo and timing processor comprising:

a digital signal processor (44) for performing high speed computations affecting servo control of the disk drive;

a servo timing generator (70), coupled to the digital signal processor (44), for storing and providing instructions to operably control the disk drive;

a microcomputer (42) operatively coupled to, but separate from, the digital signal processor (44) for initiating operation of the digital signal processor (44); and

the digital signal processor (44) continuing operation independent of the microcomputer.

7. A servo and timing processor according to claim 8 wherein the microcomputer (42), digital signal processor (44), and servo timing generator (70) are formed on a single chip.

8. A servo and timing processor according to claim 8 wherein the digital signal processor comprises:

a first memory (120) for storing a program of instructions;

a second memory (122) for storing coefficients and data, the coefficients being arranged within the second memory according to a predefined pattern of use for the program stored in the first memory (120);

an operational unit, operatively coupled to the first and second memories, for processing information using the coefficients and data stored in the second memory (122) in accordance with the instructions stored in the first memory (120);

a program counter (124) for holding an address to the first memory (120) indicative of a memory location that stores a next instruction to be processed by the operational unit;

a data pointer register (134) for holding an address to the second memory (122) indicative of a memory location that stores data to be used in the operational unit; and

a coefficient pointer register (130) for holding an address to the second memory (122) indicative of a memory location that stores a coefficient to be used in the operational unit, the coefficient pointer register (130) including means for indexing (132) to a subsequent address in the predefined pattern indicative of a memory location that stores a next coefficient to be used in the operational unit independently of, and without receiving information from, the instructions to be processed in the operational unit.

9. A servo disk drive comprising the servo and timing processor of claim 8.

10. A method for processing data within a digital signal processor used in a servo disk drive, the method comprising the following steps:

storing a program of instructions in a first memory (120);

storing coefficients and data in a second memory (122);

arranging the coefficients in a predefined pattern within the second memory (122);

initially transferring an address of a next instruction to a first register (124) from an external source;

initially transferring an address of selected data to a second register (134) from the external source;

initially transferring an address of a selected coefficient to a third register (130) from the external source;

accessing and retrieving the selected data and selected coefficient using respective addresses stored in the second and third registers;

processing information using the selected data and selected coefficient; and

incrementing the third register (130) to a subsequent address indicative of a memory location that stores the next coefficient in the pattern independently of, and without receiving the subsequent address from, the external source.

SERVO AND TIMING PROCESSOR

TO 22a

26a

26

24

14

18

22a

20

16

22

18

12

20

20

18

22b

40

12a

10

FIG. 1

EP 0 626 685 A2

EP 0 626 685 A2

Fig 2

FIG 3

DBUS   CBUS

DATA FORMATTER — 142

MULTIPLIER — 140

ALU — 144

148

ACCUMULATOR — 146

44

150 — SHIFT REGISTER

LSHIFT F/F — 152

FIG. 4

Fig 5

FIG. 6

FIG. 1

110

18 → SERVO CONTROL REGISTER  118

CONTROL AND TIMING SIGNALS

18 → 10 → EXTERNAL SIGNALS

8 → INTERNAL SIGNALS

116  NEXT ADDRESS REG.  6 → / 6 →

113

114  SERVO FIELD COUNTER LOWER  8 →  =0  CO

111

112  BRANCH ADDR. REG.  8 →  SFC UPPER  CI  =0  2 → CONDITION BITS

CONTROL

CLK

6  BRANCH ADDRESS

17